# EUROPEAN PATENT SPECIFICATION

(11) **EP 0 659 641 B1**
(45) Date of publication and mention of the grant of the patent: **10.03.1999**
(21) Application number: 94119623.0
(22) Date of filing: 12.12.1994
(51) Int. Cl.: B64C 21/10, F15D 1/06, F15D 1/12, F04D 29/22, F04D 29/68, F01N 1/24, F16L 55/033

(54) **A fluxional force-generated sound reducing device**
Vorrichtung zur Dämpfung des, durch die Strömung einer Flüssigkeit, erzeugten Geräusches
Atténuateur du bruit produit par l'écoulement d'un fluide

(30) Priority: 15.12.1993 JP 315166/93
(43) Date of publication of application: 28.06.1995
(73) Proprietor: Mitsubishi Jukogyo Kabushiki Kaisha, Tokyo 100 (JP)
(72) Inventor: Nishimura, Masaharu, c/o Takasago Res. & Dev. Ctr., Arai-cho, Takasago-shi, Hyogo-ken (JP); Kudo, Toshifumi, c/o Takasago Res. & Dev. Center, Arai-cho, Takasago-shi, Hyogo-ken (JP); Hirota, Kazuo, c/o Takasago Res. & Dev. Center, Arai-cho, Takasago-shi, Hyogo-ken (JP); Higashida, Akio, c/o Kobe Shipyard & Machinery W., Hyogo-ku, Kobe-shi, Hyogo-ken (JP); Nakagawa, Keizo, c/o Kobe Shipyard & Machinery W., Hyogo-ku, Kobe-shi, Hyogo-ken (JP); Yamaguchi, Tsutomu, c/o Kobe Shipyard & Machinery, Hyogo-ku, Kobe-shi, Hyogo-ken (JP); Nishioka, Michio, Sumiyoshi-ku, Osaka-shi, Osaka (JP)
(74) Representative: Behrens, Dieter, Dr.-Ing.

(56) References cited:
- DE-A- 3 710 691
- US-A- 1 903 823
- US-A- 2 322 632
- US-A- 4 211 305

## Description

The present invention relates to an object contacting a fluid and moving relative to the fluid or being a pipe or duct conveying the fluid, comprising a fur-like portion having fine fibers planted thereon so as to reduce sound generated by fluxional forces acting on the object.

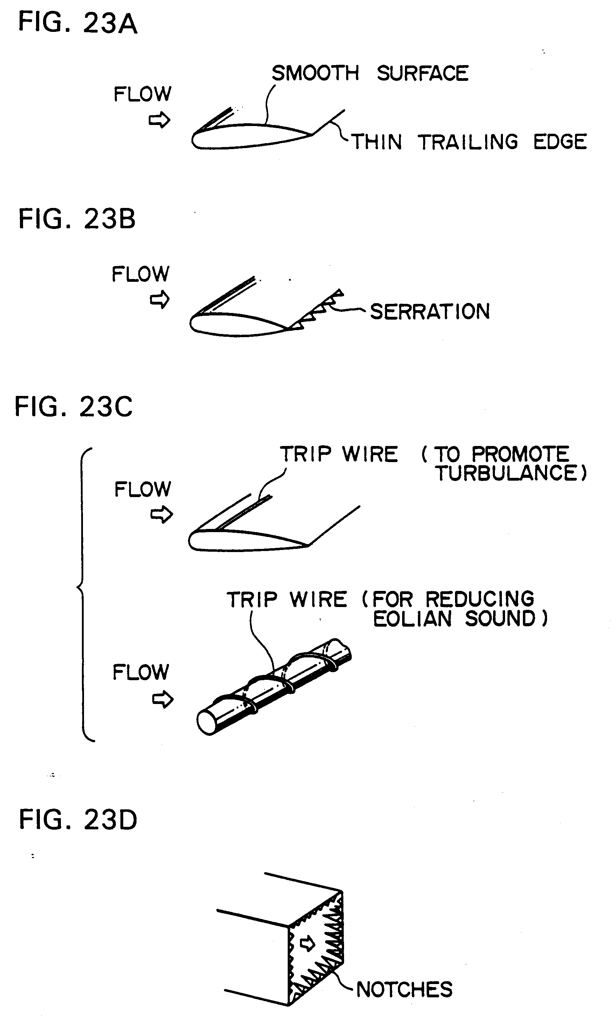

Conventionally, when an object made from metal or resin is placed in fluid relatively moving thereto, it has been disposed in the fluid with its hard surface exposed to the fluid. Also, the hard inside surface of conventional pipes or ducts made from metal or resin for conveying fluids is exposed to the fluid. Therefore, this relative movement between the fluid and the wall surface brings about fluxional force-generated sound. In order to reduce the fluxional force-generated sound, various techniques have been made such as smoothing the surface of the object to make a fluid flow smoothly. Alternatively, as to an object moving in a fluid, such as a wing, a trailing edge of the wing is made thin to reduce trailing vortexes to be generated (see Fig.23A) or the trailing edge may be provided with serration in order to weaken the correlation of perpendicular components of the trailing vortexes with respect to the flowing direction of the fluid (see Fig.23B). Further, it is possible to provide tripping wires on the surface of a rigid body so as to promote turbulent flow to occur (see Fig.23C).

In addition, in the opening end portion of pipes or ducts, etc. the edge is serrated in order to reduce the correlation of perpendicular components of the trailing vortexes with respect to the flow direction of the fluid as well as to promote jet mixing (see Fig. 23D).

In general, it is believed that fluxional force-generated sound occurs because of pressure fluctuations on an object surface or inner wall surface of pipes, ducts, etc. due to boundary layer turbulence on the surface of the object or the inside surface of the pipes, ducts, etc. or due to turbulent flow on the upstream side of the flow. Also, the noise is believed to be generated by pressure fluctuations induced at a trailing edge of an object or in the vicinity of an opening end portion of a pipe or duct due to trailing vortexes produced by the outflow at the trailing edge or by the outflow from the opening end portion of the pipe or duct, etc.

The fluxional force-generated sound can be reduced when any of the following conditions are attained. That is, the sound can be reduced by:
1) reducing the turbulence itself;
2) reducing the pressure fluctuations induced on the object surface by the turbulence;
3) making smaller the area of correlation of pressure fluctuations induced on the object surface due to the turbulence, so that the energy of the pressure fluctuations may be converted into sound energy to a smaller extent; or
4) providing a fur-like portion having fibers planted on at least a part of a surface of the object or a pipe or a duct which surface comes into contact with the fluid or an object contacting the fluid and moving relative thereto as described in US patent 4,211,305. The fur-like portion is formed by disposing a fur-like material comprising a base sheet material and fine fibers planted thereon. Similar means for sound reduction are described in German Offenlegungsschrift DE 3 710 691 A1, US patent 2,322,632 and US patent 1,903,823, e. g. for use on wings, helicopter rotor blades and propellers. Fur-like materials are also used attached over microphones as windshields.

However, it has been impossible to reduce the fluxional force-generated sound to an always sufficiently low level with the aforementioned measures, especially those shown in Figs. 45A to 45D.

The present invention as defined in the appended claims has been proposed under the consideration of the above problems, and it is an object thereof to provide a fluxional force-generated sound reducing device which is capable of sharply reducing fluxional force-generated sound arising from an object placed in a fluid moving with respect thereto or from a pipe or duct conveying a flowing fluid or a vane moving relative to the fluid. Hereinbelow, fluid means liquid or gas, or a mixture of gas, liquid and solid particles in any possible combinations.

The subject of the invention is constructed such that the positioning of fur-like material having fine fibers is limited to e.g. a trailing edge of an object for interacting with a fluid flow by contact and having a leading and a trailing edge or to an open end portion of a pipe or duct conveying a fluid flowing therethrough. In the thus constructed trailing edge or the opening end portion, it is possible to form the surface of the fine fiber material substantially in level with the surface of the object or the inside surface of the pipe or duct. Further, it is also possible to provide a porous material layer limited to the trailing edge of the object or the edge of the pipe or duct and fur the surface of the porous material with fine fibers.

When fine fibers are provided on a porous material or when an object or pipe itself is made from a porous material with fine fibers planted thereon, the porous material adds a further cushioning effect. Besides, the porous material has functions of absorbing pressure fluctuations and allowing the fluid to permeate to the other side thereof, whereby the fluxional force-generated sound can be further reduced.

In the cases where fine fibers are limited to a trailing edge of an object or an opening end portion of a pipe, etc. :
(a) The boundary between the object (rigid body) and the fluid is made obscure, and therefore the generation of strong trailing vortexes is prevented.
(b) In the above case, the sound generated from the fine fibers themselves can be inhibited to a great degree because of the same reason described in (a) above for an object disposed in a flow or pipes or ducts through which a fluid flows.
(c) When a porous material is provided at the trailing edge of the object or the end portion of the pipe, etc. with fine fibers planted thereon, the above effects can be further enhanced, and it is expected that pressure fluctuations generated around the trailing edge or the end of the pipe can be further absorbed by the porous material.

Fine fibers that can be used in the present invention are not restricted to specific types as long as they are sufficiently fine and soft to reduce unwanted sound generated by fluxional forces. They can, for example, be natural fibers, such as animal or plant fibers, or chemical fibers. Perhaps less preferable, but fibers made of natural or synthetic rubber and those made of metal may also be used.

These fibers can be planted or glued onto a surface of a rigid body directly, or they can be planted on a suitable base sheet material and the cloth-like material with fibers planted thereon may be placed on the rigid body. Alternatively, an animal fur or boa or flannel cloth may be used and attached to the surface which comes into contact with flowing fluid.

Also, the length of the fibers should be determined depending on the type of the fluid to be dealt with. For example, if the fluid is air, the length of the fibers should be between 0.5 mm and 50 mm and preferably around 10 mm. For water, the length of the fibers should also be between 0.5 mm and 50 mm.

The thickness of the fibers may be between 10 µm and 1.0 mm. For the fiber materials mentioned above, the diameter of the fiber is preferably 0.1 mm to 0.5 mm. Fibers made of metal may not be thicker than 0.5 mm in diameter.

The amount of fibers per area surface would be 5% to 70%, and preferably 10% to 50%, measured as a percentage of the sectional area of each fiber times the number of planted fibers per unit area of a surface which is covered by the fibers.

The physical properties of the fibers can be chosen depending of the fluid or the flow speed at a particular position. The fibers should be soft enough to bent, though not in a discontinuous manner, when they come into contact with the fluid. They should not produce noise due to collisions among themselves, particularly in a frequency range at which noise should be reduced.

If the fibers are planted on a surface of a rigid body, they may be directly attached at one end onto the surface using any suitable adhesive material or a thermosetting resin adhesive. Also, the surface of a rigid body may be shaved by a given depth which may be 10% to 90% of the length of the fibers. Fibers may be directly fixed onto the shaven surface using an adhesive or a thermosetting resin adhesive, or may be inserted at one end into a layer of an unset adhesive disposed on the shaven surface. The thickness of the adhesive layer may preferably be around 10% of the length of the fibers, but can be considerably varied depending on types of the adhesive and fibers. Alternatively, fine fibers may be plated on a base sheet material, such as cloth or leather or a synthetic resin sheet, using an adhesive, and then the base material with the planted fibers can be fixed to the surface of a rigid body or a porous material using, for example, an adhesive. One end of fibers may also be woven into the base material.

The length of fibers which are exposed from the surface of an object or the surface of the base sheet material may be 10 to 90% of the length of the fibers.

Porous materials that can be used in the present invention are too numerous to mention all, and include, for example, porous plates, such as punching metal, which may have a sound absorbing material or air layer on their back side. The pore diameter should be 10 mm or less, and the ratio of openings to the total surface area should preferably be more than 30%. Also, metal mesh which has openings covering 30% or more of the total surface with or without an sound absorbing material or air layer on their back side. Further, porous metals, porous concretes and porous boards may be used as the porous material for the present invention, with or without a sound absorbing material or air layer on their back side. Still further, a sound absorbing material which are reinforced with cloth or metal mesh to improve surface rigidity. These porous materials have a higher acoustic transmissivity and an improved acoustic absorptivity than normal rigid walls.

When fine fibers are disposed on a porous material, they should be securely fixed on the surface of the porous material without closing small openings the porous material has. The adhesive for this purpose has to be chosen to provide stronger adhesion. For the purpose of the calculation of desired coverage of the surface with fibers mentioned above, the opening portions of porous materials are excluded. If fine fibers are planted on a base sheet material and the base material with the planted fibers is fixed to porous material with an adhesive, the base material should have a good breathability, and it should be fixed to a porous material so as to maintain a good breathability. The choice of an adhesive has to be made to satisfy these conditions and also provide strong adhesive strength.

The angle of planted fibers with respect to a surface the fibers cover should preferably be around 90 degrees (perpendicular to the surface), but may be varied within 45 degrees from the direction perpendicular to the surface with sufficient sound reducing effects.

### BRIEF DESCRIPTION OF THE DRAWINGS

Fig.1 is a vertical sectional side view showing Example 1 of a fluxional force-generated sound reducing device
Fig.2 is a vertical sectional side view showing Example 2 of a fluxional force-generated sound reducing device;
Fig.3 is a vertical sectional side view showing Example 3 of a fluxional force-generated sound reducing device;
Fig.4 is a vertical sectional side view showing Example 4 of a fluxional force-generated sound reducing device;
Fig.5 is a vertical sectional side view showing Example 5 in which a device of the present invention is applied to a blow-off opening of a duct;
Fig.6 is a vertical sectional side view showing Example 6 in which a device of the present invention is applied to a blow-off opening of a duct;
Fig.7 is a vertical sectional side view showing Example 7 in which a device of the present invention is applied to a blow-off opening of a duct;
Fig.8 is a graph schematically showing a relation between the distance 'X' covered by a fur-like material and the sound reduction effected by the example shown in Fig.7;
Fig.9 is a vertical sectional side view showing Example 8 in which a device of the present invention is applied to a blow-off opening of a duct;
Fig.10 is a graph showing sound reduction effects as a function of sound frequencies in Examples 5 through 8;
Fig.11 is a vertical sectional side view showing Example 9 in which a device of the present invention is applied to a collector placed downstream of a blow-off opening of a duct;
Figs.12A and 12B are views showing Example 10 in which a device of the present invention is applied to a collector placed downstream of a blow-off opening of a duct;
Figs.13A and 13B are views showing Example 11 in which a device of the present invention is applied to a collector placed downstream of a blow-off opening of a duct;
Figs.14A and 14B are views showing Example 12 in which a device of the present invention is applied to a collector placed downstream of a blow-off opening of a duct;
Fig.15 is a graph showing sound reduction effects as a function of sound frequencies in Examples 9 through 12;
Figs.16 to 19 are vertical sectional side views showing Examples 13 through 16 in each of which a device of the present invention is applied to guide vanes in a bending portion of a flow passage;
Fig.20 is a graph showing sound reduction effects as a function of sound frequencies in Examples 13 through 16;

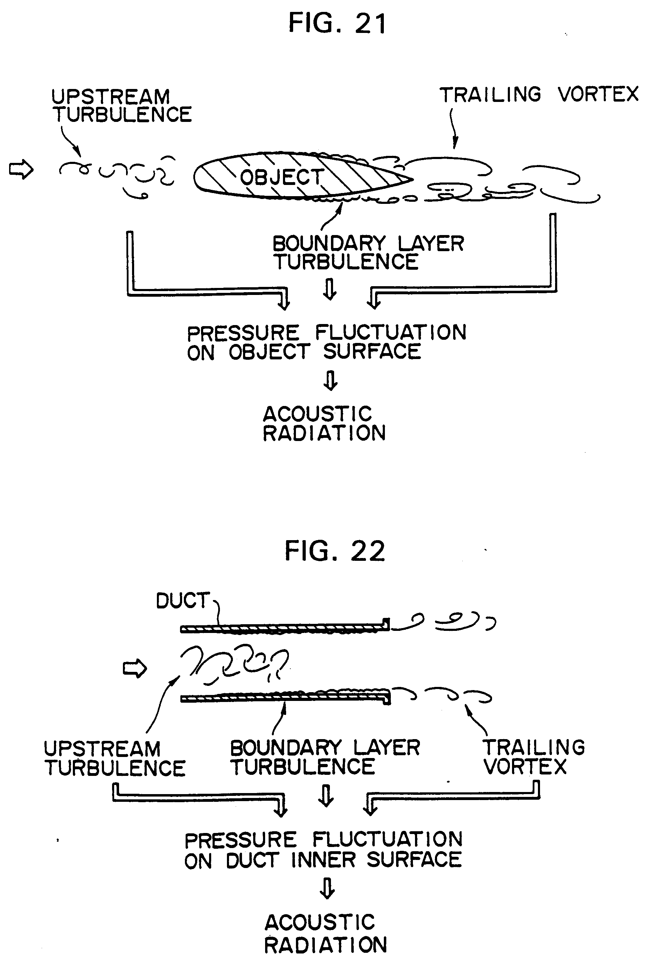

Figs.21 and 22 are diagrams illustrating mechanisms of generation of fluxional force sound; and
Figs 23A to 23D are illustrations showing conventional measures for reducing fluxional force-generated sound.

### DESCRIPTION OF THE PREFERRED EMBODIMENTS

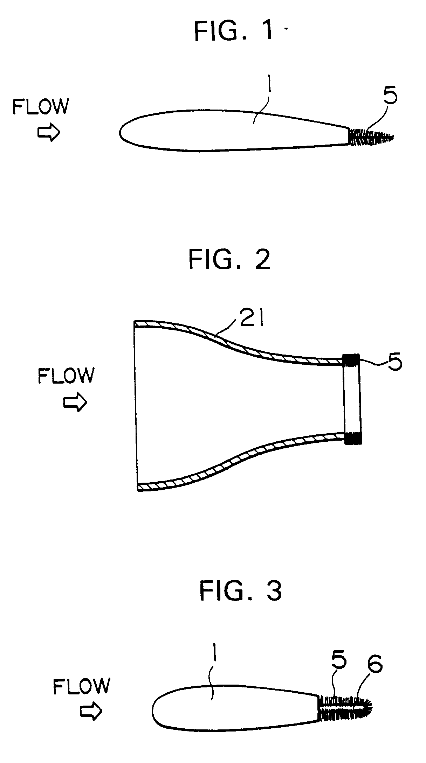

Basic configurations of fluxional force-generated sound reduce devices of the present invention will hereinafter be explained with reference to Examples 1 through 11 shown in Figs.1 to 11. Further, specific examples will be described in Examples 11 through 34 wherein devices of the present invention are applied to a fluid blow-off opening, a collector positioned downstream of a blow-off opening, guide vanes provided in a flow passage, a vehicle or aircraft, rotor blades of a helicopter, an air conditioner, an inside surface of a duct or pipe, and a valve inside a pipe.

### (Example 1)

Fig.1 shows Example 1 of a fluxional force-generated sound reducing device of the present invention. In the figure, designated at 1 is an object moving relative to a fluid. A member with fine fibers 5 planted thereon is provided in a trailing edge of the object 1.

### (Example 2)

Fig.2 shows Example 2 of a fluxional force-generated sound reducing device of the present invention. In the figure, designated at 21 is a pipe or duct (a wind tunnel nozzle) conveying a fluid. Fine fibers 5 are disposed around the outlet edge of the pipe or duct 21.

### (Example 3)

Fig.3 shows Example 3 of a fluxional force-generated sound reducing device of the present invention. In the figure, designated at 1 is an object moving relative to a fluid. A porous member 6 with fine fibers 5 planted thereon is joined to a trailing edge of the object 1.

### (Example 4)

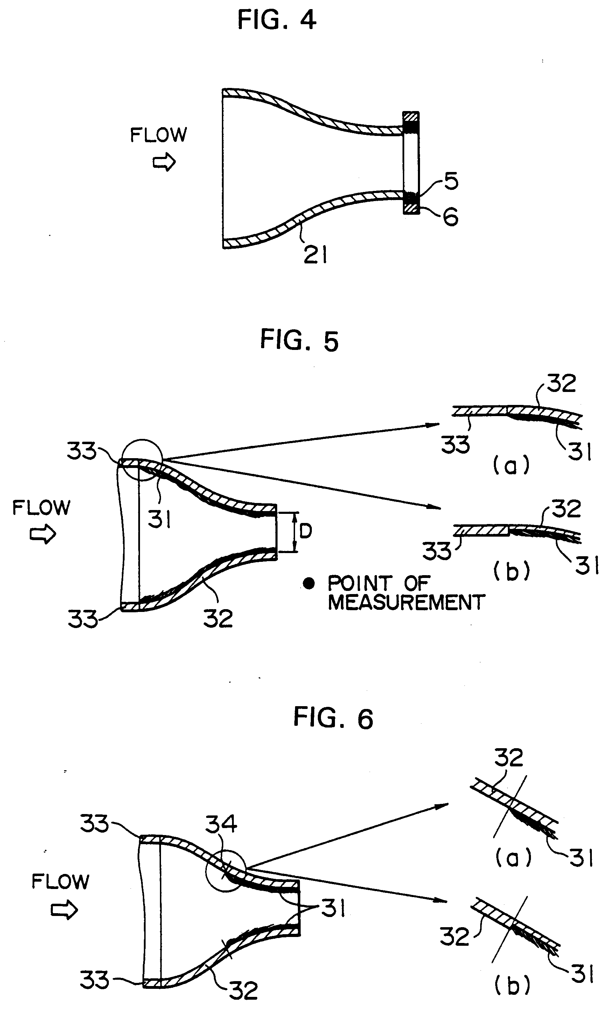

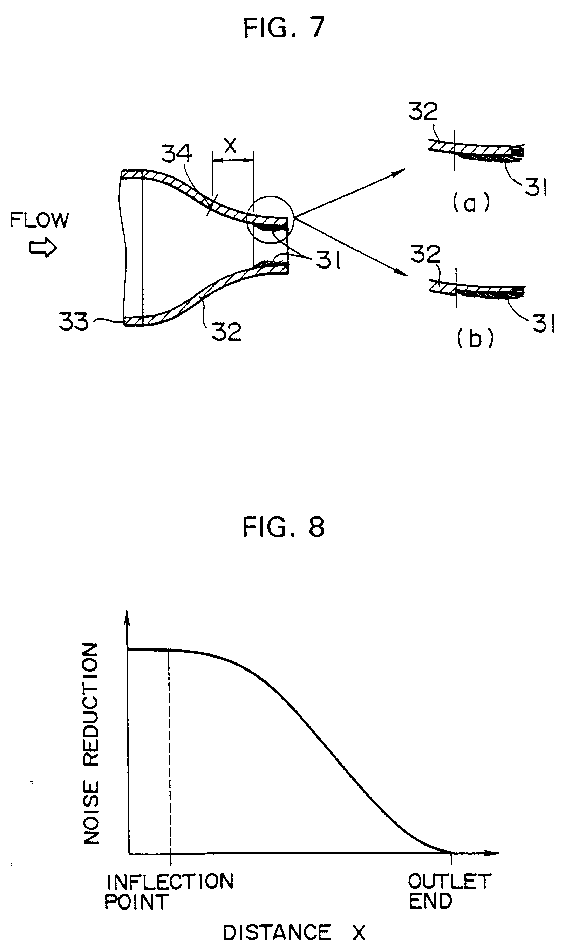

Fig.4 shows Example 4 of a fluxional force-generated sound reducing device of the present invention. In the figure, designated at 21 is a pipe or duct (a blow-off nozzle) conveying a fluid. Fine fibers 5 are disposed around the outlet edge of the pipe or duct 21.

Next, descriptions will be made about the operations of the fluxional force-generated sound reducing device according to the present invention

In the cases where fine fibers 5 are provided on a trailing edge of an object 1 or an opening end portion of a pipe 2, etc. as shown in Figs.1 through 4:
1) The boundary between the object (a rigid body) and the fluid is made obscure, so that the generation of strong trailing vortexes is prevented.
2) In the above case, the sound generated from the fine fibers 5 themselves can be reduced to a large extent because of the cushening effect of the fibers which softens vortixes colliding with the surface
3) When a porous member is joined to the trailing edge of the object 1 or the end portion of the pipe 2, etc. with fine fibers 5 planted thereon, the above effect can be further enhanced and the absorbing effect by a pressure fluctuation itself generated therearound can be expected.

### Examples 5 through 12

### Applications of the present invention to a wind tunnel with a blow-off opening

### (Examples 5 to 8)

### Applications of the present invention to a blow-off opening

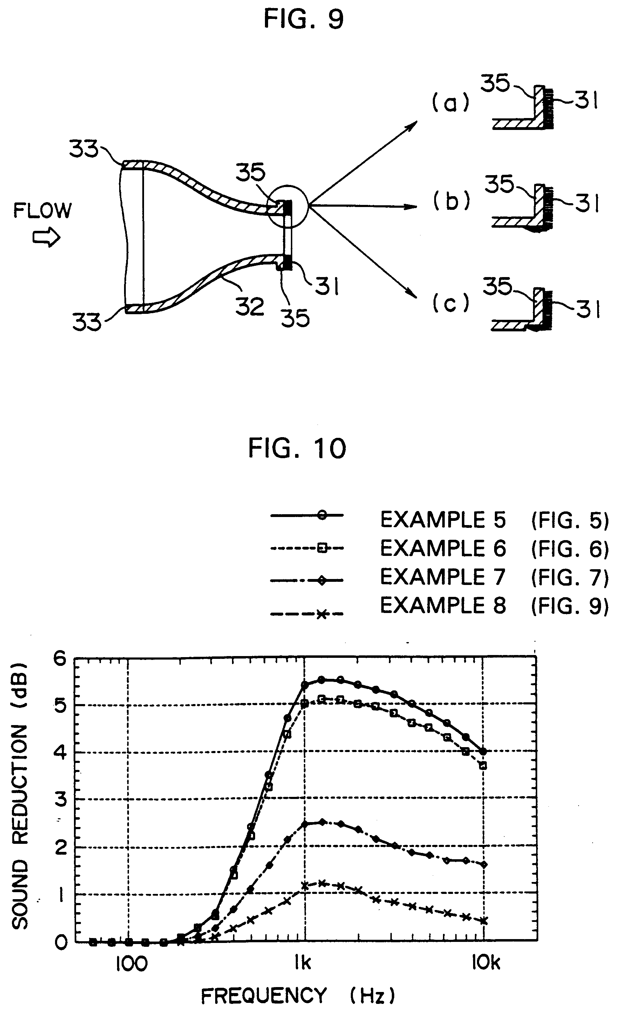

Figs.5 through 8 show applications of the present invention to a blow-off opening.

### (Example 5)

Fig.5 shows Example 5 according to the present invention for a contracted barrel 32 having a blow-off opening on the downstream side thereof and connected to a duct 33. In this example, fine fibers or a fur-like material 31 with fine fibers planted thereon is affixed on the entire inside surface of the contracted barrel 32. The contracted barrel may be made of either a rigid material or a sound absorbing material consisting of porous material. The fine fibers or fur-like material may be affixed directly on the inside surface of the contracted barrel by a method shown in manner (a) in the figure. Alternatively, the material can be affixed on the inside surface as shown in manner (b) so that the surface of the material may be connected substantially in level with the duct surface. Denoted by 'D' is a representative diameter of the blow-off opening. The duct 33 and the contracted barrel 32 in this example are used, for example, in a wind tunnel.

### (Example 6)

Fig.6 shows Example 6 of a contracted barrel 32 having a blow-off opening on the downstream side thereof. In this example, fine fibers or fur-like material 31 with fine fibers planted thereon is affixed on the part of the inside surface of the contracted barrel 32 between an inflection point 34 and the blow-off opening. The portion of the contracted barrel with the material 31 affixed thereon may be made of either a rigid material or a sound absorbing material consisting of porous material. The fine fibers or fur-like material may be affixed directly on the inside surface of the contracted barrel by a method shown in manner (a) in the figure. Alternatively, the material can be affixed on the inside surface as shown in manner (b) so that the surface of the material may be connected substantially in level with the conducted barrel surface.

### (Example 7)

Fig.7 shows Example 7 of a contracted barrel 32 having a blow-off opening on the downstream side thereof. In this example, fine fibers or fur-like material 31 with fine fibers planted thereon is affixed on the whole part of the inside surface of the contracted barrel 32 between a point which is positioned apart by a distance 'X' downstream of an inflection point 34 and the blow-off opening. The portion of the contracted barrel with the material 31 affixed thereon may be made of either a rigid material or a sound absorbing material consisting of porous material. The fine fibers or fur-like material may be affixed directly on the inside surface of the contracted barrel by a method shown in manner (a) in the figure. Alternatively, the material can be affixed on the inside surface as shown in manner (b) so that the surface of the material may be connected substantially in level with the contracted barrel surface. Fig.8 is a graph schematically showing the relationship between the distance 'X' and noise reduction. The units of the abscissa and ordinate axes in the graph are arbitrarily taken.

### (Example 8)

Fig.9 shows Example 8 of a contracted barrel 32 having a flange 35 in the outlet portion thereof. In this example, fine fibers or fur-like material 31 with fine fibers planted thereon is affixed on the surface of the flange 35 facing the downstream side. The flange as well as the portion of the contracted barrel with the material 31 affixed thereon may be made of either a rigid material or a sound absorbing material consisting of porous material. The fine fibers or fur-like material may be trimmed in a manner shown in manner (a) so that the edge of the contracted barrel is substantially leveled with the material. Alternatively, the material may be extended inside the contracted barrel as shown in manner (b). Further, the extended portion affixed on the inside surface of the barrel may be formed as shown in manner (c) so that the surface of the material may be connected substantially in level with the inside surface of the contracted barrel.

Fig.10 shows results of measurements on the sound reduction effect as a function of sound frequencies in Examples 5 through 8 shown in Figs.5 to 7 and 9, respectively. The measurement was made at a point, as shown in Fig.5, away from the end of the blow-off opening by the distance 'D' in a downstream direction from the blowout opening, and off by 1.5D from the axis of the barrel, where D denotes the representative diameter of the blowout opening. The flow speed of the fluid in the blow-off opening when the measurement was done was 83.4m/s.

Examples 5 through 8 can be applied, for example, to a wind tunnel.

### (Examples 9 through 12)

### Applications of the present invention to a collector positioned downstream of a blow-off opening of a wind tunnel

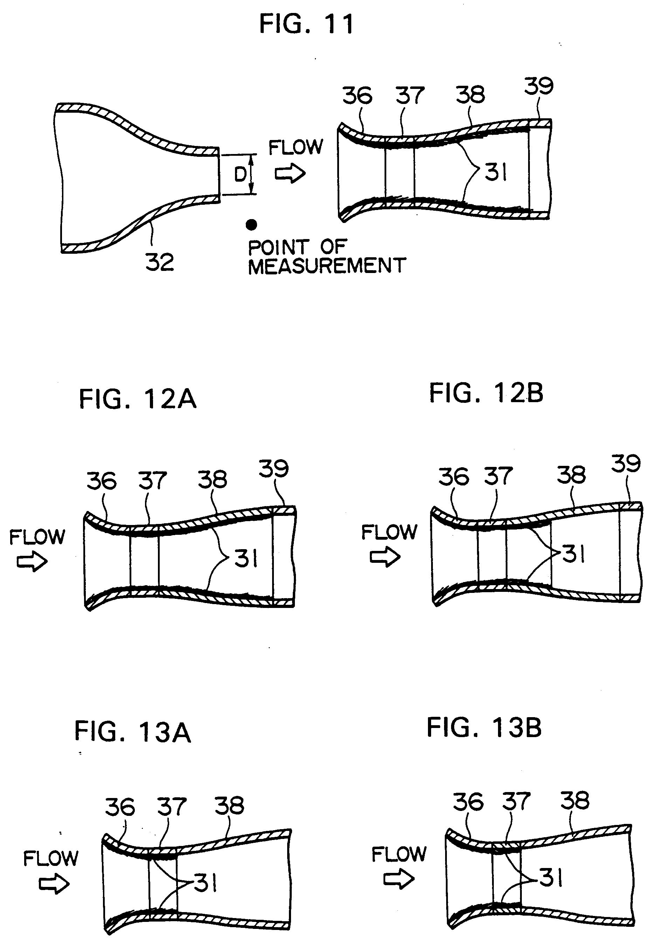

Figs.11 through 14 show applications of the present invention to a collector disposed downstream of a blow-off opening of a duct.

Fig.11 shows Example 9 of a pipe having a collector 36, a straight pipe portion 37 having a constant cross-section and a diffuser 38 downstream of the straight pipe portion. In this example, fine fibers or a fur-like material 31 with fine fibers planted thereon is affixed on the entire inside surface of the pipe. In the Fig.11, a contracted barrel 32 is depicted upstream of the collector 36 in order to clarify the positional relation therebetween.

Figs.12A and 12B show Example 10 of a pipe 39 having a collector 36, a straight pipe portion 37, and a diffuser 38. The diffuser 38 is made of a porous material for sound absorption. The contracted barrel 32 is omitted in these figures. In this example, fine fibers or a fur-like material 31 with fine fibers planted thereon is affixed on the entire inside surfaces of the collector 36, the straight pipe portion 37 and the diffuser 38 (Fig.12A). Alternatively, the material 31 is affixed on the entire inside surfaces of the collector 36 and the straight pipe portion 37 and on a part of the diffuser 38 (Fig.12B). In the case where the fine fibers or fur-like material is affixed on a part of the diffuser 38, the material should be affixed in a range of from the upstream end of the diffuser to a reattachment point of the flow after flow separation. Practical dimensions of the fur-like material affixed portion vary depending upon features of wind tunnels.

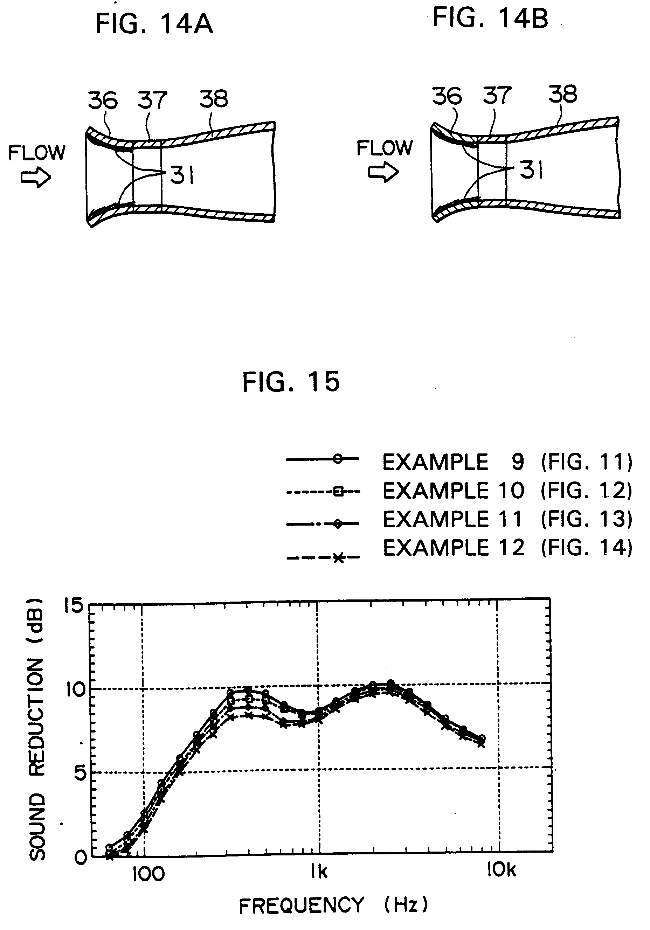

Figs.13A and 13B show Example 11 of a pipe having a collector 36, a straight pipe portion 37 and a diffuser 38. In this example, fine fibers or fur-like material 31 with fine fibers planted thereon is affixed on the inside surfaces of the collector 36 and the straight pipe portion 37. The collector 36 and the straight pipe portion 37 may be made of either a rigid material (Fig.13A) or a sound absorbing material consisting of porous material (Fig.13B).

Figs.14A and 14B show Examples 12 of a pipe having a collector 36, a straight pipe portion 37 and a diffuser 38. In this example, fine fibers or fur-like material 31 with fine fibers planted thereon is affixed on only the inside surface of the collector 36. The collector 36 may be made of either a rigid material (Fig.14A) or a sound absorbing material consisting of porous material (Fig.14B).

Fig.15 shows measured results of sound reduction effects in the examples shown in Figs.11 to 14, more specifically, with configurations shown in Figs.11, 12B, 13A, and 14A. The measurement was made at a point shown in Fig.11, which is equivalent to that shown in Fig.5. The flow speed in the blow-off opening at the measurement was 83.4m/s, which is identical with that at the measurement shown in Fig.10.

### (Examples 13 through 16)

### Applications of the present invention to guide vanes

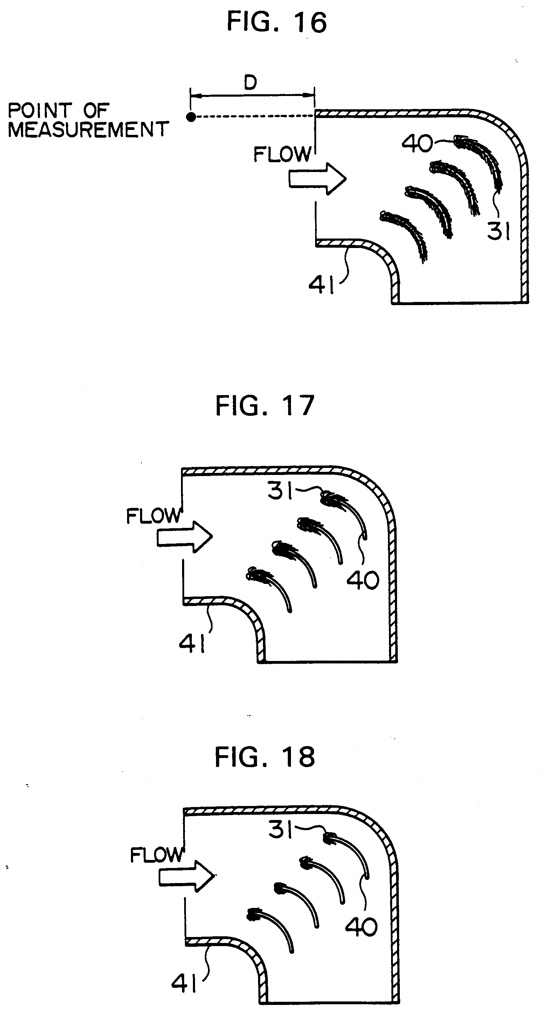

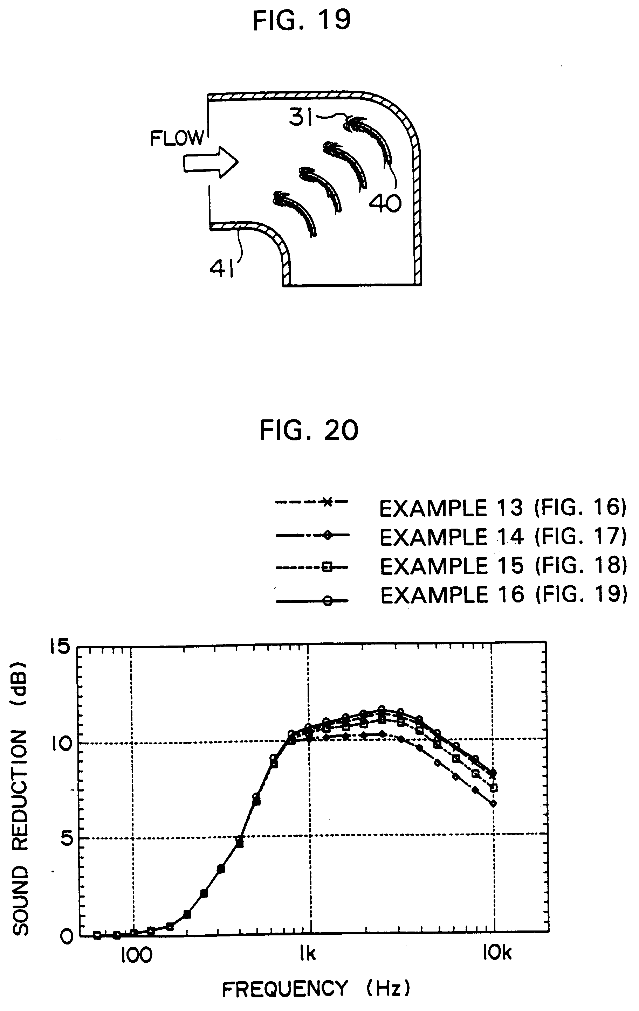

Figs.16 through 19 show applications of the present invention to guide vanes in a bending portion of a flow passage.

Fig.16 shows Example 13, not covered by the claims, in which fine fibers or a fur-like material 31 with fine fibers planted thereon is affixed on the entire surface of guide vanes 40 disposed in a bent portion 41 of a flow passage. The guide vanes 40 may be made of either a rigid material or a sound absorbing material consisting of porous material.

Fig.17 shows Example 14 in which fine fibers or a fur-like material 31 with fine fibers planted thereon is affixed on upstream ends and thereabout of guide vanes 40. The material is preferably affixed on both sides of each guide vane 40 in a range of from the upstream end of the guide vane 40 down to a position one-forth of the vane length. The guide vanes 40 may be made of either a rigid material or a sound absorbing material consisting of porous material.

Fig.18 shows Example 15 in which fine fibers or a fur-like material 31 with fine fibers planted thereon is affixed only on upstream ends of guide vanes 40. The guide vanes 40 may be made of either a rigid material or a sound absorbing material consisting of porous material.

Fig.19 shows Example 16, not covered by the claims, in which fine fibers or a fur-like material 31 with fine fibers planted thereon is affixed only on upstream ends and concave sides of guide vanes 40. That is, almost all part of the convex side of each guide vane 40 has no fur-like material 31 affixed. The guide vanes 40 may be made of either a rigid material or a sound absorbing material consisting of porous material.

Fig.20 shows measurements of sound reduction effects in the examples shown in Figs.16 to 19. The measurement was made at a point shown in Fig.16, where 'D' is the representative diameter of the duct. The main-flow speed at the time of measurement was 60m/s.

## Claims

1. An object for interacting with a fluid flow by contact and having a leading and a trailing edge, comprising a fur-like portion having fine fibers planted thereon so as to reduce sound generated by fluxional forces acting on the object, characterized in that the positioning of the fur-like portion (31) is limited to a part of the object surface contacting the fluid which is located around the trailing edge (32) of the object.

2. A duct or pipe for conveying a fluid between two ends thereof, comprising a fur-like portion having fine fibers planted on the surface of the pipe or duct contacting the fluid so as to reduce sound generated by fluxional forces acting on said surface, characterized in that the positioning of the fur-like portion is limited to a part located around at least one end of the pipe or duct (26), which end is an open end portion thereof.

3. The object according to claim 1 or 2, wherein a top surface formed by the fine fibers of the fur-like portion is substantially leveled with the surface of the object or the pipe or duct at a surface boundary between the portion covered by the fine fibers and a neighboring portion not covered by the fine fibers.

4. The object according to claim 1 or 2, wherein a porous material layer is provided at the trailing edge or at the open end portion of the object and the fur-like portion is provided on a surface of the porous material layer.

5. The object according to claim 1, which is a pantagraph for an electric vehicle.

6. The object according to claim 1, which is a vehicle or aircraft.

7. The object according to claim 1, which comprises rotor blades.

8. The object according to claim 7, wherein the rotor blades are for a helicopter.

9. A flow passage with a bending portion, said bending portion comprising guide vanes contacting the fluid and moving relative to the fluid, each guide vane comprising a fur-like portion, the positioning of said portion being limited to an end of said vane located upstream with respect to the flow of the fluid, the fur-like portion having fine fibers planted thereon so as to reduce sound generated by fluxional forces acting on the vane.

## Patentansprüche

1. Objekt, das durch Berührung mit einer Fluidströmung in Wechselwirkung zu treten vermag und einen vorderen und einen hinteren Rand aufweist, mit einem pelzähnlichen Abschnitt, an dem Feinfasern befestigt sind, um Geräusch zu reduzieren, das durch auf das Objekt einwirkende Strömungskräfte erzeugt wird,
dadurch gekennzeichnet, daß die Positionierung des pelzähnlichen Abschnitts (31) auf einen Teil der mit dem Fluid in Berührung stehenden Objektfläche beschränkt ist, der im Bereich des hinteren Randes (32) vom Objekt angeordnet ist.

2. Leitung oder Rohr zum Leiten eines Fluides zwischen deren bzw. dessen beiden Enden, mit einem Feinfasern aufweisenden pelzähnlichen Abschnitt, der an der mit dem Fluid in Berührung stehenden Fläche des Rohres oder der Leitung befestigt ist, um Geräusch zu reduzieren, das durch auf die genannte Fläche einwirkende Strömungskräfte erzeugt wird,
dadurch gekennzeichnet, daß die Positionierung des pelzähnlichen Abschnitts auf einen Teil im Bereich wenigstens eines Endes des Rohres oder der Leitung beschränkt ist, das ein offener Endabschnitt des- bzw. derselben ist.

3. Objekt nach Anspruch 1 oder 2,
bei dem eine von den Feinfasern des pelzähnlichen Abschnitts gebildete Oberseite auf im wesentlichen gleicher Höhe wie die Fläche des Objektes oder des Rohres oder der Leitung an einer Flächengrenze zwischen dem mit den Feinfasern bedeckten Abschnitt und einem nicht mit den Feinfasern bedeckten benachbarten Abschnitt angeordnet ist.

4. Objekt nach Anspruch 1 oder 2,
bei dem eine Schicht aus porösem Werkstoff am hinteren Rand oder an dem offenen Endabschnitt des Objektes vorgesehen ist, und der pelzähnliche Abschnitt an einer Fläche der Schicht aus porösem Werkstoff vorgesehen ist.

5. Objekt nach Anspruch 1, das ein Stromabnehmer für ein elektrisches Fahrzeug ist.

6. Objekt nach Anspruch 1, das ein Fahrzeug oder ein Luftfahrzeug ist.

7. Objekt nach Anspruch 1, das Rotorblätter umfaßt.

8. Objekt nach Anspruch 7, bei dem die Rotorblätter für einen Hubschrauber bestimmt sind.

9. Strömungsdurchlaß mit einem Winkelabschnitt, der Leitschaufeln aufweist, die mit dem Fluid in Berührung stehen und sich relativ zum Fluid bewegen, wobei jede Leitschaufel einen pelzähnlichen Abschnitt aufweist, dessen Positionierung auf ein bezüglich der Fluidströmung stromaufwärts gelegenes Ende der Leitschaufel beschränkt ist, wobei an dem pelzähnlichen Abschnitt Feinfasern befestigt sind, um das Geräusch zu reduzieren, das durch auf die Leitschaufel einwirkende Strömungskräfte erzeugt wird.

## Revendications

1. Objet destiné à interagir par contact avec un écoulement d'un fluide et possédant un bord avant et un bord arrière, comprenant une portion semblable à de la fourrure sur laquelle sont plantées de fines fibres de façon à réduire le bruit généré par les forces de flux agissant sur l'objet, caractérisé en ce que le positionnement de la portion semblable à de la fourrure (31) est limité à une partie de la surface de l'objet en contact avec le fluide qui est située autour du bord arrière (32) de l'objet.

2. Conduit ou tuyau servant à transporter un fluide entre deux de ses extrémités, comprenant une portion semblable à de la fourrure où de fines fibres sont plantées sur la surface du conduit ou tuyau en contact avec le fluide de façon à réduire le bruit généré par les forces de flux agissant sur ladite surface, caractérisé en ce que le positionnement de la portion semblable à de la fourrure est limité à une partie située autour d'au moins une extrémité du conduit ou tuyau (26), laquelle extrémité est une portion d'extrémité ouverte de celui-ci.

3. Objet selon la revendication 1 ou 2, dans lequel une surface supérieure formée par les fines fibres de la portion semblable à de la fourrure est sensiblement au même niveau que la surface de l'objet ou du conduit ou du tuyau à une frontière de surfaces entre la portion recouverte par les fines fibres et une portion voisine non recouverte par les fines fibres.

4. Objet selon la revendication 1 ou 2, dans lequel une couche de matériau poreux est disposée au bord arrière ou à la portion d'extrémité ouverte de l'objet et la portion semblable à de la fourrure est disposée sur une surface de la couche de matériau poreux.

5. Objet selon la revendication 1 qui est un pantographe d'un véhicule électrique.

6. Objet selon la revendication 1 qui est un véhicule ou un aéronef.

7. Objet selon la revendication 1 qui comprend des pales de rotor.

8. Objet selon la revendication 7, dans lequel les pales de rotor sont destinées à un hélicoptère.

9. Passage d'écoulement comprenant une portion courbe, ladite portion courbe comprenant des aubes directrices en contact avec le fluide et en mouvement relatif par rapport au fluide, chaque aube directrice comprenant une portion semblable à de la fourrure, le positionnement de cette portion étant limité à une extrémité de ladite aube située en amont par rapport à l'écoulement du fluide, de fines fibres étant plantées sur la portion semblable à de la fourrure de façon à réduire le bruit généré par les forces de flux agissant sur l'aube.
